# EUROPÄISCHE PATENTSCHRIFT

(11) **EP 3 806 429 B1**
(45) Veröffentlichungstag und Bekanntmachung des Hinweises auf die Patenterteilung: **24.07.2024**
(21) Anmeldenummer: 20200700.1
(22) Anmeldetag: 08.10.2020
(51) Int. Cl.: H04L 67/12, H04L 67/565

(54) **VERFAHREN ZUR ÜBERSETZUNG VON M-BUS DATEN UND VORRICHTUNG ZUR DURCHFÜHRUNG DES VERFAHRENS**
METHOD FOR TRANSLATING M-BUS DATA AND DEVICE FOR CARRYING OUT THE METHOD
PROCÉDÉ DE TRADUCTION DE DONNÉES M-BUS ET DISPOSITIF DE MISE EN OEUVRE DU PROCÉDÉ

(30) Priorität: 10.10.2019 DE 102019215567
(43) Veröffentlichungstag der Anmeldung: 14.04.2021
(73) Patentinhaber: QUNDIS GmbH, 99098 Erfurt (DE)
(72) Erfinder: HERZ, Andreas, 99867 Gotha (DE)
(74) Vertreter: Liedtke & Partner Patentanwälte

(56) Entgegenhaltungen:
- EP-A1- 2 282 484
- US-A- 6 088 659

## Beschreibung

Die Erfindung betrifft ein Verfahren zur Ermittlung von Daten. Des Weiteren betrifft die Erfindung eine Vorrichtung zur Durchführung des Verfahrens.

Aus dem Stand der Technik sind Verfahren zur Auslesung von Messdaten von Messgeräten bzw. Verbrauchszählern, wie Wasser-, Strom- oder Gaszählern, bekannt. Derartige Zähler sind beispielsweise an Verbrauchsstellen in einem Gebäude oder einem Raum installiert. Die Verbrauchszähler erfassen Messdaten, wobei Auslesegeräte programmiert sind, aus den Messdaten resultierende Daten bereitzustellen.

Versorgungsunternehmen, wie beispielsweise Energieversorgungsunternehmen oder Wasserversorgungsunternehmen, erfassen üblicherweise zur Erstellung von Verbrauchsabrechnungen für Kunden als Daten Verbrauchsdaten. Beispielsweise weisen die Verbrauchszähler Schnittstellen auf, über welche M-Bus Telegramme gesendet oder empfangen werden. Die M-Bus Daten haben das Ziel der Verbrauchserfassung zu Abrechnungszwecken.

In einem üblichen Verfahren werden M-Bus Telegramme umfassend beispielsweise Rohdaten mittels Auslesegeräten statisch interpretiert. Rohdaten können als Messdaten in einem unmittelbar von einem Messgerät oder einem Verbrauchszähler bereitgestellten Format vorliegen. Die Messdaten werden beispielsweise für zurückliegende Verbrauchsperioden in einem nicht lesbaren Format gespeichert. M-Bus (kurz für: Meter-Bus) ist eine technische Norm, durch deren Anwendung in Verbrauchszählern der Verbrauch von beispielsweise Strom als Messdaten übertragen werden können.

Zum Beispiel umfassen Telegramme erfasste Messwerte. Messwerte sind beispielsweise Zählerstandinformationen, die durch Verbrauchswertmess- und Verteilgeräte, insbesondere Verbrauchszähler, wie Wasser-, Strom-, Wärme- oder Gaszähler, und Heizkostenverteiler ermittelbar sind. Beispielsweise werden Telegramme, z. B. Datentelegramme, von Messdienstleistern verwendet, um Verbrauchswertabrechnungen, beispielsweise für Nebenkostenabrechnungen von vermieteten Wohnungen und Räumen, zu erstellen.

Nachteilig ist, dass bei Änderungen von Informationen innerhalb der Daten, insbesondere Messdaten, diese nicht mehr interpretiert werden können. Somit ist eine Anpassung des Auslesegeräts, insbesondere dessen Programmierung, oder eines so genannten Parsers oder eine Rückkehr zur statischen Auslesevariante auf Herstellerseite notwendig. Eine zusätzliche Anpassung ist mit Zeitaufwand und Kosten verbunden.

Das Dokument EP 2 988 256 A1 beschreibt ein Verfahren zur Verwaltung von Kundendaten bei der Auslagerung einer Datenanalyse. Das Verfahren umfasst die Übertragung einer anonymen Kundenkennung, die einem Kunden eindeutig zugeordnet ist. Ferner umfasst das Verfahren den Empfang einer Kundendatenabfrage von einem Drittanbieter, die den Kunden unter Verwendung der Kunden-ID referenziert und Kundendaten anfordert. Das Verfahren umfasst das Bestimmen, ob eine Zugriffssteuerungsrichtlinie die Offenlegung von Kundendaten ermöglicht, die in der Kundendatenabfrage angefordert werden. In Reaktion auf die Zugriffssteuerungsrichtlinie, die die Offenlegung der angeforderten Kundendaten ermöglicht, umfasst das Verfahren den Zugriff auf die angeforderten Kundendaten und die Übermittlung der angeforderten Kundendaten an den Drittanbieter. In Reaktion auf die Zugriffssteuerungsrichtlinie, die die Offenlegung der angeforderten Kundendaten verbietet, umfasst das Verfahren das Verweigern der Kundendatenabfrage.

Das Dokument US 6,088,659 beschreibt einen Server zur Ablesung von Datenerfassungseinheiten zur Erfassung eines Energieverbrauchs, welcher eine offene, verteilte Architektur aufweist und mit dem systemweite Daten solcher Energieverbrauchs-Datenerfassungseinheiten gesammelt, geladen und verwaltet werden sowie an ein übergeordnetes System zur Geschäftsprozessverwaltung weitergeleitet werden. Der Server umfasst ein Repositorium zur Ablage von Verbrauchsdaten und stellt einen Zugriff auf Informationen bereit, indem Verbrauchsdaten und Erfassungsintervalle gesammelt, gespeichert, validiert, geschätzt, bearbeitet, veröffentlicht und gesichert werden. Der Server empfängt Daten von Energieverbrauchs-Datenerfassungseinheiten, die mit Modems versehen sind. Die Daten werden von einem Format, welches von den Energieverbrauchs-Datenerfassungseinheiten und der Kommunikationsinfrastruktur angeboten wird, in ein Format konvertiert, das für den Server und das Repositorium zugreifbar ist. Vor einer Übertragung werden die Daten von einem Server-kompatiblem Format in ein Format konvertiert, das für das übergeordnete System zur Geschäftsprozessverwaltung spezifisch ist. Die Daten können entsprechend den Anforderungen dieses Systems zur Geschäftsprozessverwaltung validiert werden. Der Server stellt Dienste zur Nutzung durch online-Nutzer sowie Schnittstellen für unterschiedliche Plattformen und Firmware-Produkte von Energieverbrauchs-Datenerfassungseinheiten bereit, Schnittstellen zur Wartung der Systemverfügbarkeit, zur Datenwiederherstellung und für den Zugriff auf Legacy-System sowie eine Programmierschnittstelle bereit.

Das Dokument EP 2 282 484 A1 beschreibt ein Verfahren zum Darstellen von Informationen über den Energieverbrauch eines Nutzers. Das Verfahren umfasst die Schritte: Auslesen eines elektronischen Stromzählers zum Ermitteln von Daten über den Energieverbrauch bei dem Nutzer, Übermitteln der Daten an einen Server, Aufbereiten der Daten durch den Server, Übermitteln der aufbereiteten Daten an eine Einheit bei dem Nutzer und Darstellen der von der Einheit empfangenen Daten auf einem mit der Einheit verbundenen Fernsehgerät.

Der Erfindung liegt die Aufgabe zu Grunde, ein neuartiges Verfahren zur Ermittlung von mittels zumindest einer Datenerfassungseinheit erfassten M-Bus Rohdaten, insbesondere Messdaten, und eine Vorrichtung zur Durchführung des Verfahrens anzugeben, mit dem derartige Messdaten dauerhaft und unkompliziert Ableseunternehmen oder anderen Nutzern solcher Messdaten bereitgestellt werden können. Weiterhin liegt der Erfindung die Aufgabe zugrunde, ein Computerprogrammprodukt zur Durchführung des neuartigen Verfahrens anzugeben.

Hinsichtlich des Verfahrens wird die Aufgabe erfindungsgemäß durch die im Anspruch 1 angegebenen Merkmale gelöst. Hinsichtlich der Vorrichtung wird die Aufgabe erfindungsgemäß durch die im Anspruch 8 angegebenen Merkmale gelöst. Hinsichtlich des Produktes wird die Aufgabe erfindungsgemäß durch die im Anspruch 9 angegebenen Merkmale gelöst.

Vorteilhafte Ausgestaltungen der Erfindung sind Gegenstand der Unteransprüche.

In einem Verfahren zur Ermittlung von Daten werden mittels zumindest einer Datenerfassungseinheit erfasste M-Bus Rohdaten in einem M-Bus Format an eine externe Datenverarbeitungseinheit übermittelt, wobei die übermittelten M-Bus Daten über eine Internetverbindung an eine zentrale Datenverarbeitungseinheit übermittelt werden. Die Daten können als Verbrauchsdaten ausgebildet sein. In der zentralen Datenverarbeitungseinheit werden die M-Bus Rohdaten mittels zumindest eines M-Bus Parsers übersetzt, wobei die übersetzten Daten über eine Internetverbindung an die externe Datenverarbeitungseinheit übermittelt werden. Ein dem M-Bus Parser zugrundeliegender Parsingalgorithmus ist so implementiert und umgesetzt, dass eine Aktualisierung des Parsingalgorithmus ermöglicht ist.

Insbesondere ist die Datenerfassungseinheit ein auf dem M-Bus-Standard basierendes Gerät, welches M-Bus Rohdaten, insbesondere Messdaten, im M-Bus Format erfasst und weiterleitet. Beispielsweise ist die Datenerfassungseinheit ein so genannter intelligenter Zähler (Smart Meter). Zum Beispiel ist die Datenerfassungseinheit ein Messgerät, wie beispielsweise ein Zähler. Des Weiteren kann die Datenerfassungseinheit ein Datensammler und -verteiler, ein so genanntes Gateway oder eine Datenkonzentrationseinheit sein. Beispielsweise ist die Datenerfassungseinheit mit mehreren Messgeräten verbunden.

Ein Aspekt der Erfindung besteht darin, dass M-Bus Rohdaten, welche beispielsweise energieverbrauchsabhängige Messwerte umfassen und welche in einem festen, nach der Installation der Datenerfassungseinheit im Wesentlichen in einem unveränderlichen Format über einen M-Bus übertragen werden, in eine Datendarstellung transformiert werden, welche für eine Auswertung durch einen Nutzer, beispielsweise ein Ableseunternehmen, mit einer externen Datenverarbeitungseinheit geeignet ist. Je nach Anforderung des Nutzers kann die durch den M-Bus Parser vorgenommene Transformation eine Extraktion von (Teil-)Daten und/oder eine Übersetzung von Daten (beispielsweise durch Umrechnung in eine andere Maßeinheit) umfassen.

Eine weitere Ausführungsform sieht vor, dass ein Parsingalgorithmus des Parsers, insbesondere des M-Bus Parsers, aktualisierbar ist. Beispielsweise wird der Parsingalgorithmus in der zentralen Datenverarbeitungseinheit aktualisiert. Dadurch, dass der Parsingalgorithmus aktualisierbar, insbesondere anpassbar und/oder austauschbar ist, wird erreicht, dass Anforderungen unterschiedlicher Nutzer (zum Beispiel verschiedener Ableseunternehmen) und/oder geänderte Anforderungen eines Nutzers ohne Eingriff an der Datenerfassungseinheit und ohne Eingriff an der jeweiligen externen Datenerfassungseinheit umgesetzt werden können.

In einer Ausführungsform ist die Datenerfassungseinheit als mobiles Auslesegerät ausgebildet, das beweglich, vorzugsweise tragbar, und zum Empfang von M-Bus kompatiblen Daten eingerichtet ist. Ein solches mobiles Auslesegerät kann beispielsweise als Smartphone ausgebildet sein, das mit einer M-Bus kompatiblen Empfangseinheit gekoppelt ist. Die M-Bus kompatible Empfangseinheit ist zum Empfang von Daten im M-Bus Format eingerichtet. Das Smartphone ist mittels eines als App ausgebildeten Programms für die Übertragung dieser M-Bus Rohdaten an eine zentrale Datenverarbeitungseinheit eingerichtet.

Die mittels der Messgeräte als M-Bus Rohdaten erfassten Informationen werden an die Datenerfassungseinheit zur weiteren Übertragung übermittelt. Alternativ ist die Datenerfassungseinheit eine so genannte Cloud oder eine lokale Auslesungseinheit. Die Datenübertragung erfolgt beispielsweise drahtlos oder drahtgebunden. Beispielsweise umfasst die Datenerfassungseinheit eine Anzahl von Schnittstellen, wie beispielsweise für eine Nahfeld-, Fernfeld- und/oder Funkkommunikation. M-Bus Daten werden gemäß der Norm EN 13757 zur Verbrauchsermittlung, insbesondere Verbrauchswertermittlung, zu Abrechnungszwecken oder für andere Dienstleistungen, wie Fehler- und Problemermittlungen und/oder Analysen verwendet. Die übersetzten Daten definieren beispielsweise Verbrauchs- und Servicedaten.

Mittels des erfindungsgemäßen Verfahrens wird eine generische Lösung zur Ermittlung von Daten im Rahmen einer Datenkommunikation im M-Bus Format beispielweise erzielt. Auch bei Änderungen der semantischen Bedeutung von Daten, insbesondere Messdaten, ist eine Interpretation der erfassten M-Bus Rohdaten durch eine Aktualisierung des dem M-Bus Parser zugrundeliegenden, aktualisierbar implementierten und ausgelegten Parsingalgorithmus ermöglicht.

Beispielsweise kann die Maßeinheit und/oder physikalische Bedeutung eines Datenwertes geändert werden. Beispielsweise kann ein bislang als Energieverbrauchswert mit der Maßeinheit "Joule" interpretierter Datenwert künftig als Leistungsverbrauchswert mit der Maßeinheit "Watt" interpretiert werden. Alternativ oder zusätzlich können Zeiträume, die einem Datenwert zugrunde liegen, beispielsweise ein Zeitraum für einen erfassten Energieverbrauchswert, umgestellt werden, beispielsweise von einem monatlichen auf einen jährlichen Energieverbrauch. Alternativ oder zusätzlich können Faktoren, mit welchen ein übertragener Datenwert zu multiplizieren ist, vorgesehen oder verändert werden. Insbesondere ist es möglich, von neuen oder geänderten Messgeräten gelieferte Datenwerte so anzupassen, beispielsweise zu skalieren, dass sei kompatibel zu Datenwerten sind, welche von anderen Messgeräten geliefert werden.

Der M-Bus Parser ist beispielsweise ein Programm, insbesondere ein Computerprogramm, zur Übersetzung und Umwandlung von Eingabedaten in ein für eine Weiterverarbeitung geeignetes Format. Insbesondere übersetzt der M-Bus Parser die empfangenen M-Bus Rohdaten auf generische Weise, beispielsweise gemäß der Norm EN 13757. Der M-Bus Parser wird über das Internet bereitgestellt. Ein Nutzer, wie ein Ableseunternehmen, welcher die mittels der Datenerfassungseinheit erfassten Daten empfängt, kann eine Übersetzungsanforderung und die M-Bus Daten über das Internet an den M-Bus Parser senden. Der M-Bus Parser wird also als Onlinedienst (Parsing- bzw. Übersetzungsservice) bereitgestellt. Zum Beispiel wird der M-Bus Parser im Internet über gängige Technologien wie SOAP, WSDL, HTML und/oder über andere maschinenlesbare/-interpretierbare Kommunikationstechniken bereitgestellt. Beispielsweise wird der M-Bus Parser im Internet über Protokolle, Netzwerke und/oder über andere industrielle Standards des World Wide Web Consortiums (kurz: W3C) angeboten. Mittels des Verfahrens ist eine dauerhafte und unkomplizierte Lösung zur Datenübersetzung für Ableseunternehmen oder andere Nutzer von kleinen, mittelgroßen oder großen Firmen geschaffen.

Beispielsweise werden die M-Bus Rohdaten mit einer zugehörigen Identifikations- oder Zuordnungsinformation von der Datenerfassungseinheit an die externe und an die zentrale Datenverarbeitungseinheit übermittelt.

In einer Weiterbildung werden die M-Bus Rohdaten in einem Datenstrom übermittelt. Zum Beispiel übermittelt die Datenerfassungseinheit die erfassten M-Bus Rohdaten, insbesondere Messdaten, über einen Datenstrom an die externe Datenverarbeitungseinheit. Die externe Datenverarbeitungseinheit ist beispielsweise ein Endgerät, wie ein Messdatenempfangsgerät, ein mobiles Endgerät oder ein Computer eines Nutzers.

Des Weiteren kann ein beliebiger M-Bus Datenstrom, auch M-Bus Stream genannt, aus einer beliebigen Quelle an die zentrale Datenverarbeitungseinheit übermittelt werden. Die zentrale Datenverarbeitungseinheit ist beispielsweise ein Server. Alternativ oder zusätzlich stellt die zentrale Datenverarbeitungseinheit zumindest einen Server bereit. Der Server stellt die benötigte serverseitige Infrastruktur zur Verfügung, mittels welcher der M-Bus Parser über das Internet genutzt werden kann. Insbesondere wird der M-Bus Parser als Onlinedienst angeboten. Die externe Datenverarbeitungseinheit umfasst beispielsweise eine entsprechende clientseitige Anwendung, welche mit dem Server kommuniziert.

Zum Beispiel werden die M-Bus Rohdaten von der externen Datenverarbeitungseinheit an die zentrale Datenverarbeitungseinheit über ein Netzwerkprotokoll, wie beispielsweise SOAP (kurz für: Simple Object Access Protocol) übermittelt.

In einer weiteren Ausführungsform werden die M-Bus Rohdaten von der externen Datenverarbeitungseinheit an die zentrale Datenverarbeitungseinheit in einer Metasprache, wie beispielsweise in einer plattform-, programmiersprachen- und protokoll-unabhängigen Beschreibungssprache für Netzwerkdienste übermittelt. Zum Beispiel ist die Metasprache WSDL (kurz für: Web Services Description Language).

In einer möglichen Ausführungsform werden die M-Bus Rohdaten von der externen Datenverarbeitungseinheit an die zentrale Datenverarbeitungseinheit in einer Auszeichnungssprache, insbesondere einer textbasierten Auszeichnungssprache, übermittelt. Die Auszeichnungssprache ist beispielsweise HTML (kurz für: Hypertext Markup Language).

Der M-Bus Parser übersetzt bzw. "parst" die empfangenen M-Bus Daten und setzt diese in definierte Strukturen um.

Eine weitere Ausführungsform sieht vor, dass in der zentralen Datenverarbeitungseinheit zumindest ein neues Format einer Listen-, Tabellen- und/oder Textdatei erzeugt wird, in welche die übersetzten Daten eingefügt/eingepflegt werden.

Vorzugsweise ist das neue Format ein maschinenlesbares Datenformat und/oder ein Datenformat, welches ohne Zuhilfenahme von Programmmitteln für einen menschlichen Nutzer lesbar und verständlich ist (mensch- und maschinenlesbares Format).

Das neue Format umfasst die übersetzten Daten und kann zurück an die externe Datenverarbeitungseinheit zur weiteren Verarbeitung und Auswertung übermittelt werden. Insbesondere erhält der Nutzer des M-Bus Parsers, wie ein Ableseunternehmen, die übersetzten Daten, insbesondere in Form von definierten und verständlichen Strukturen, in einem vorgebbaren Format zurück. Beispielsweise kann der Nutzer vor der Übersetzungsanforderung ein bestimmtes, vorgebbares Format, wie beispielsweise ein Listen-, Tabellen- und/oder Textformat, auswählen. Des Weiteren können die übersetzten Daten in einer Datenbank hinterlegt werden. Ein Nutzer, insbesondere ein Kunde und/oder ein Ablese-/Abrechnungsunternehmen, kann über Identifikation und Authentifizierung einen Datenbankzugriff erhalten.

Zum Beispiel werden die M-Bus Rohdaten von der zentralen Datenverarbeitungseinheit, insbesondere vom M-Bus Parser, interpretiert und in ein vorgegebenes Format übersetzt. Beispielsweise werden die M-Bus Rohdaten in eine Auszeichnungssprache, insbesondere eine erweiterbare Auszeichnungssprache wie XML (kurz für: Extensible Markup Language) übersetzt und im Format einer Textdatei ausgegeben. Alternativ werden die M-Bus Rohdaten im Format einer Textdatei auf CSV basierend (kurz für: Comma-Separated Values) ausgegeben. Erfindungsgemäß wird in der externen Datenverarbeitungseinheit eine Übersetzungsanforderung der M-Bus Rohdaten generiert und an die zentrale Datenverarbeitungseinheit übermittelt. Beispielsweise wird ein M-Bus Datenstrom als Anfrage, insbesondere als Übersetzungsanforderung, über gängige Technologien, wie SOAP, WSDL, HTML an die zentrale Datenverarbeitungseinheit übermittelt. Die übersetzten Daten werden in dem neu generierten Format zurück an die externe Datenverarbeitungseinheit gesendet.

In einem weiteren Ausführungsbeispiel werden auf Übermittlungsanforderung die übersetzten Daten von der zentralen Datenverarbeitungseinheit an die externe Datenverarbeitungseinheit übermittelt. Beispielsweise werden die übersetzten Daten in der zentralen Datenverarbeitungseinheit gespeichert. Nach einer von der externen Datenverarbeitungseinheit oder einer anderen Datenverarbeitungseinheit gesendeten Übermittlungsanforderung, beispielsweise über entsprechende Authentifizierungen und nach Austausch von Identifikationsinformationen, werden die übersetzten Daten übermittelt.

Zum Beispiel erfolgt die Übermittlung der M-Bus Rohdaten und der Übersetzungsanforderung an den M-Bus Parser über ein in der externen Datenverarbeitungseinheit installiertes Anwendungsprogramm bzw. -software.

Gemäß einer Weiterbildung werden die übersetzten Daten zur Datenhaltung in der zentralen Datenverarbeitungseinheit hinterlegt. Eine mögliche Ausgestaltung sieht vor, dass eine Zuordnung der übersetzten Daten über eine Identifikationsnummer der zumindest einen Datenerfassungseinheit erfolgt. D. h., ein Zugriff auf die gespeicherten/hinterlegten übersetzten Daten erfolgt anhand einer Gerät-Identifikationsnummer, wie einer Serien- und/oder Herstellernummer, und über entsprechende Authentifizierungen.

In einer möglichen Ausgestaltung werden anhand der übersetzten Daten ein Verbrauch und dem Verbrauch zugeordnete Kosten ermittelt. Beispielsweise werden zusätzlich zur Übersetzung eine Abrechnungserstellung und andere Dienstleistungen über die zentrale Datenverarbeitungseinheit bereitgestellt.

Des Weiteren betrifft die Erfindung eine Vorrichtung zur Durchführung des Verfahrens zur Ermittlung von Daten, umfassend zumindest eine mit einer externen Datenverarbeitungseinheit kommunizierende zentrale Datenverarbeitungseinheit, wobei die externe Datenverarbeitungseinheit mittels zumindest einer Datenerfassungseinheit erfasste M-Bus Rohdaten, insbesondere Messdaten, in einem M-Bus Format über eine Internetverbindung an die zentrale Datenverarbeitungseinheit übermittelt. Die zentrale Datenverarbeitungseinheit umfasst einen M-Bus Parser, welcher die übermittelten bzw. empfangenen M-Bus Rohdaten übersetzt und die übersetzten Daten über eine Internetverbindung an die externe Datenverarbeitungseinheit übermittelt. Dabei ist die zentrale Datenverarbeitungseinheit für eine Aktualisierung des dem M-Bus Parser zugrundeliegenden Parsingalgorithmus ausgelegt. Neben verbrauchsbezogenen Daten können die an den M-Bus Parser übertragenen Daten auch Informationen von einem Endgerät, beispielsweise Statusinformationen, Fehlermeldungen oder weitere Messwerte umfassen.

Die übersetzten Daten können zeitvariante Daten umfassen, welche sich zeitabhängig verändern. Zusätzlich oder alternativ können die übersetzten Daten statische Daten umfassen, die zeitunabhängig sind.

Beispielsweise umfassen die zentrale Datenverarbeitungseinheit und die externe Datenverarbeitungseinheit jeweils eine Internet-Kommunikationsschnittstelle über welche beide miteinander kommunizieren, insbesondere Daten austauschen.

Die externe Datenverarbeitungseinheit ist beispielsweise ein Endgerät eines Kunden, beispielsweise eines Auslese- und/oder Abrechnungsunternehmens. Die externe Datenverarbeitungseinheit umfasst zumindest eine Kommunikationsschnittstelle, über welche die externe Datenverarbeitungseinheit mittels einer Datenerfassungseinheit erfasste M-Bus Rohdaten in einem Datenstrom empfängt.

Die Datenerfassungseinheit ist beispielsweise ein M-Bus Gerät, ein Messgerät, ein Datenkonzentrator, ein Gateway, eine Cloud oder ein anderes auf M-Bus basierendes Gerät. Die externe Datenverarbeitungseinheit kann als mobiles Endgerät, beispielsweise als Smartphone, ausgebildet sein oder ein solches mobiles Endgerät umfassen.

Die externe Datenverarbeitungseinheit übermittelt M-Bus Rohdaten in einem Datenstrom mit einer Übersetzungsanforderung in einem ersten Format, beispielsweise SOAP, WSDL und/oder HTML, an die zentrale Datenverarbeitungseinheit. Die externe Datenerfassungseinheit kann auch für den Empfang von M-Bus Rohdaten von einer Mehrzahl von Messgeräten eingerichtet sein, welche gesammelt an die zentrale Datenverarbeitungseinheit weitergeleitet werden.

Insbesondere ist die zentrale Datenverarbeitungseinheit ausgebildet, einen Datenstrom, insbesondere M-Bus Datenstrom, aus einer beliebigen Quelle zu empfangen. Der M-Bus Parser interpretiert und übersetzt die übermittelten M-Bus Rohdaten und generiert ein zweites, insbesondere definiertes und strukturiertes Format, wie beispielsweise eine Datei in XML oder CSV Format.

Insbesondere ist der M-Bus Parser ein Onlinedienst. D. h., dass der M-Bus Parser über eine Internetverbindung zugänglich ist.

Ausführungsbeispiele der Erfindung werden im Folgenden anhand von Zeichnungen näher erläutert.

Darin zeigen:
- Figur 1: schematisch eine Ausführungsform einer zentralen Datenverarbeitungseinheit zur Ermittlung von M-Bus Rohdaten, und
- Figur 2: schematisch eine Ausführungsform einer Vorrichtung zur Übertragung und Ermittlung von M-Bus Rohdaten hin zu übersetzten Daten.

Einander entsprechende Teile sind in allen Figuren mit den gleichen Bezugszeichen versehen.

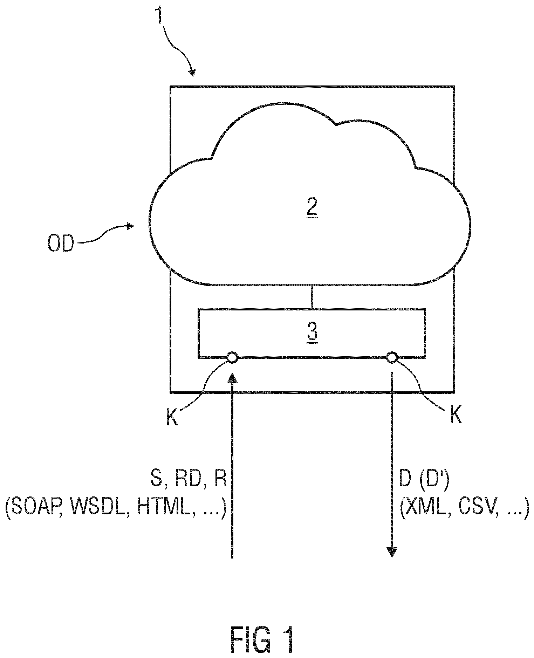

**Figur** 1 zeigt schematisch eine Datenverarbeitungseinheit 1, welche aus M-Bus Rohdaten RD, insbesondere Messdaten, resultierende Daten D ermittelt. Neben verbrauchsbezogenen Daten können die resultierenden Daten D Informationen von einem Endgerät, beispielsweise Statusinformationen, Fehlermeldungen oder weitere Messwerte umfassen.

Die Datenverarbeitungseinheit 1 ist beispielsweise eine zentrale Datenverarbeitungseinheit 1 und ist beispielsweise eine elektronische Datenverarbeitungsanlage, ein Rechner oder ein Server. Des Weiteren umfasst die zentrale Datenverarbeitungseinheit 1 zumindest einen M-Bus Parser 2. Der M-Bus Parser 2 ist ein so genannter Parser, insbesondere ein Computerprogramm, welcher auf Anweisung bestimmte Funktionen bzw. Aufgaben oder Probleme bearbeitet oder löst. Im dargestellten Ausführungsbeispiel ist der M-Bus Parser 2 ausgebildet, insbesondere programmiert, empfangene M-Bus Rohdaten RD, beispielsweise in Form von Telegrammen, zu übersetzen und/oder umzuwandeln. Der M-Bus Parser 2 ist derart konfiguriert, dass dieser anhand empfangener M-Bus Rohdaten RD Daten D, insbesondere verbrauchsabhängige Daten D, ermittelt. Der M-Bus Parser 2 empfängt M-Bus Rohdaten RD, insbesondere Messdaten, in einem M-Bus Format über eine Internetverbindung. Des Weiteren übersetzt der M-Bus Parser 2 die übermittelten M-Bus Rohdaten RD und pflegt übersetzte Daten D` in ein neues Format ein. Beispielsweise generiert die Datenverarbeitungseinheit 1, insbesondere deren M-Bus Parser 2, ein neues vom M-Bus Format unterschiedliches Format.

Die zentrale Datenverarbeitungseinheit 1 umfasst zumindest eine Kommunikationseinheit 3. Die Kommunikationseinheit 3 weist beispielsweise eine Kommunikationsschnittstelle K auf. Über die Kommunikationsschnittstelle K kommuniziert die Kommunikationseinheit 3 zum Datenaustausch bzw. zur Datenübertragung mit weiteren Geräten. Über die Kommunikationsschnittstelle K empfängt die zentrale Datenverarbeitungseinheit 1 bzw. deren Kommunikationseinheit 3 die Daten D, insbesondere Messdaten. Beispielsweise erfolgt die Datenübertragung über eine Internetverbindung. Des Weiteren stellt die Kommunikationseinheit 3 beispielsweise die zu übermittelnden Daten D zur Übertragung bereit.

Die Kommunikationseinheit 3 ist beispielsweise als Sendeeinheit ausgebildet. Des Weiteren ist die Kommunikationseinheit 3 beispielsweise als Empfangseinheit ausgebildet.

Insbesondere empfängt die zentrale Datenverarbeitungseinheit 1 Daten D in einem M-Bus Datenstrom S. Die M-Bus Rohdaten RD werden also in einem ersten Format übermittelt.

Die zentrale Datenverarbeitungseinheit 1 ist derart konfiguriert, einen M-Bus Datenstrom S, auch Stream genannt, aus einer Quelle drahtgebunden oder drahtlos zu empfangen. Der Protokollstapel des EN13757Kommunikationsprotokolls sieht verschiedene mögliche physikalischen Übertragungsschichten und Datenverbindungsschichten unterhalb der Anwendungsschicht vor.

Zum Beispiel empfängt die zentrale Datenverarbeitungseinheit 1 M-Bus Rohdaten RD in einem Datenstrom S mit einer Übersetzungsanforderung R, auch als Request bzw. Anfrage bezeichnet, über ein Netzwerkprotokoll SOAP, wie beispielsweise Simple Object Access Protocol. In einer Weiterbildung empfängt die zentrale Datenverarbeitungseinheit 1 die M-Bus Rohdaten RD in einem Datenstrom S mit einer Übersetzungsanfrage R in einer Metasprache WSDL, wie beispielsweise Web Services Description Language. Des Weiteren kann die zentrale Datenverarbeitungseinheit 1 die M-Bus Rohdaten RD in einem Datenstrom S mit einer Übersetzungsanforderung R in einer Auszeichnungssprache HTML, insbesondere einer textbasierten Auszeichnungssprache, wie beispielsweise Hypertext Markup Language, empfangen. Der M-Bus Parser 2 liest beispielsweise die Übersetzungsanforderung R aus und führt die Übersetzung als Funktion der

Übersetzungsanforderung R aus. Beispielsweise beinhaltet die Übersetzungsanforderung R Informationen zum gewünschten Format, in das die übersetzten Daten D` eingepflegt werden sollen. Die Daten D liegen als aus den M-Bus Rohdaten RD übersetzte Daten D` vor.

Mit anderen Worten: Der M-Bus Parser 2 interpretiert und übersetzt die empfangenen M-Bus Rohdaten RD in ein vorgegebenes Format einer Listen-, Tabellen-, Text- und/oder Datenbankdatei. Beispielsweise generiert der M-Bus Parser 2 eine Datei in einer erweiterbaren Auszeichnungssprache XML, wie beispielsweise Extensible Markup Language. Des Weiteren kann der M-Bus Parser 2 eine CSV-Datei CSV basierend auf Comma-Separated Values generieren.

Die Kommunikationseinheit 3 übermittelt über die Kommunikationsschnittstelle K, insbesondere über eine Internetverbindung, anschließend oder auf Übermittlungsanforderung R' das neu generierte Format, umfassend die übersetzten Daten D'. Das neu generierte Format mit den übersetzten Daten D` kann für allgemeine Datenanalysen, Verbrauchsanalysen und Abrechnungszwecke genutzt werden.

Die zentrale Datenverarbeitungseinheit 1 stellt den M-Bus Parser 2 als Onlinedienst OD bereit. Mit anderen Worten: Der M-Bus Parser 2 ist als Onlinedienst OD konfiguriert. Des Weiteren ist die zentrale Datenverarbeitungseinheit 1 für eine Aktualisierung des dem M-Bus Parser 2 zugrundeliegenden Parsingalgorithmus ausgelegt, damit M-Bus Rohdaten RD jederzeit ohne Unterbrechung übersetzt werden können. Dadurch ist der M-Bus Parser 2 ständig betriebsbereit, auch bei Informationsänderungen innerhalb der M-Bus Rohdaten RD, wie beispielsweise Telegramminformationen und/oder Telegrammstrukturen der M-Bus Telegramme, diese zu interpretieren und in ein geeignetes Format zu übersetzen.

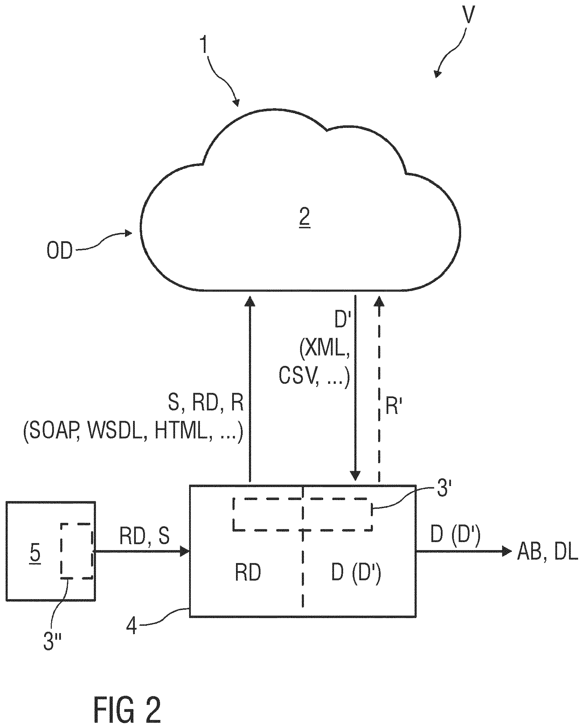

**Figur 2** zeigt schematisch eine Ausführungsform einer Vorrichtung V zur Übertragung und Ermittlung von Daten D.

Die Vorrichtung V umfasst zumindest eine mit einer externen Datenverarbeitungseinheit 4 kommunizierende zentrale Datenverarbeitungseinheit 1.

Die externe Datenverarbeitungseinheit 4 übermittelt mittels zumindest einer Datenerfassungseinheit 5 erfasste M-Bus Rohdaten RD, insbesondere Messdaten, in einem M-Bus Format über eine Internetverbindung an die zentrale Datenverarbeitungseinheit 1. Beispielsweise ist die externe Datenverarbeitungseinheit 4 ein Endgerät eines Nutzers, insbesondere Kunden, eines Ablese- und/oder Abrechnungsunternehmens.

Gemäß einer Weiterbildung ist die externe Datenverarbeitungseinheit 4 Teil der Vorrichtung V. Die externe Datenverarbeitungseinheit 4 umfasst zumindest eine Kommunikationseinheit 3', über welche die externe Datenverarbeitungseinheit 4 M-Bus Rohdaten RD in einem Datenstrom S an die zentrale Datenverarbeitungseinheit 1 übermittelt. Insbesondere werden die M-Bus Rohdaten RD über eine Internetverbindung an die zentrale Datenverarbeitungseinheit 1 übertragen. Ein Datenstrom S kann dabei beispielsweise schnell zwischen zwei Systemen übertragen werden.

Des Weiteren kann der Datenstrom S als Übersetzungsanforderung R übermittelt werden. Die Übersetzungsanforderung R und die Datenübertragung erfolgen beispielsweise über SOAP, WSDL und/oder HTML.

Die Datenerfassungseinheit 5 ist beispielsweise ein M-Bus Gerät, wie ein Messgerät, ein Gateway, ein Datensammler und/oder -verteiler. Beispielsweise können M-Bus Rohdaten RD, insbesondere Messdaten, von mehreren Messgeräten in der Datenerfassungseinheit 5 gesammelt werden. Die gesammelten M-Bus Rohdaten RD werden dann in einem Datenstrom S an die externe Datenverarbeitungseinheit 4 übertragen.

Gemäß einer Weiterbildung ist die Datenerfassungseinheit 5 ebenfalls Teil der Vorrichtung V. Die Datenerfassungseinheit 5 umfasst zumindest eine Kommunikationseinheit 3", über welche die Datenerfassungseinheit 5 erfasste M-Bus Rohdaten RD in einem M-Bus Format und in einem Datenstrom S an die externe Datenverarbeitungseinheit 4 übermittelt. Beispielsweise erfolgt die Datenübertragung drahtlos oder drahtgebunden.

Die zentrale Datenverarbeitungseinheit 1 umfasst einen M-Bus Parser 2, welcher die übermittelten bzw. empfangenen M-Bus Rohdaten RD übersetzt, insbesondere in eine Datendarstellung transformiert, und die übersetzten Daten D` über eine Internetverbindung an die externe Datenverarbeitungseinheit 4 übermittelt. Dabei ist die zentrale Datenverarbeitungseinheit 1 dafür ausgelegt, einen dem M-Bus Parser 2 zugrundeliegenden Parsingalgorithmus zu aktualisieren und/oder anzupassen, insbesondere zu erweitern und/oder teilweise oder vollständig auszutauschen.

Die übersetzten Daten D` werden in einem vom M-Bus Format unterschiedlichen Format abgelegt und gespeichert. Das neu generierte Format, beispielsweise ein XML- oder CSV-Format oder ein anderes geeignetes Format, wird auf Übermittlungsanforderung R' oder automatisch nach Übersetzung an die externe Datenverarbeitungseinheit 4 übertragen. Anhand der übersetzten Daten D` kann der Kunde Daten D auswerten und zu Abrechnungszwecken AB oder für andere Dienstleistungen DL verwenden.

### BEZUGSZEICHENLISTE

- 1: Datenverarbeitungseinheit, insbesondere zentrale Datenverarbeitungseinheit
- 2: M-Bus Parser
- 3 bis 3": Kommunikationseinheit
- 4: Datenverarbeitungseinheit, insbesondere externe Datenverarbeitungseinheit
- 5: Datenerfassungseinheit
- AB: Abrechnungszweck
- RD: Rohdaten
- D`: übersetzte Daten
- D: Daten
- DL: Dienstleistung
- K: Kommunikationsschnittstelle
- OD: Onlinedienst
- R: Übersetzungsanforderung
- R': Übermittlungsanforderung
- RD: M-Bus Rohdaten
- S: Datenstrom
- V: Vorrichtung
- CSV: CSV-Datei
- HTML: Auszeichnungssprache, insbesondere Hypertext Markup Language
- SOAP: Netzwerkprotokoll, insbesondere Simple Object Access Protocol
- WSDL: Metasprache, insbesondere Web Services Description Language
- XML: erweiterbare Auszeichnungssprache, insbesondere Extensible Markup Language

## Patentansprüche

1. Verfahren zur Ermittlung von zeitvarianten und/oder statischen Daten (D), wobei
- mittels zumindest einer Datenerfassungseinheit (5) M-Bus Rohdaten (RD) erfasst werden,
- die M-Bus Rohdaten (RD) in einem M-Bus Format an eine externe Datenverarbeitungseinheit (4) übermittelt werden,
- die übermittelten M-Bus Rohdaten (RD) über eine Internetverbindung an eine zentrale Datenverarbeitungseinheit (1) übermittelt werden,
- in der zentralen Datenverarbeitungseinheit (1) die M-Bus Rohdaten (RD) mittels zumindest eines M-Bus Parsers (2) übersetzt werden und
- die übersetzten Daten (D') über eine Internetverbindung an die externe Datenverarbeitungseinheit (4) zur Ermittlung von Daten (D) übermittelt werden,
- wobei der M-Bus Parser (2) als Online-Dienst bereitgestellt und ein dem M-Bus Parser (2) zugrundeliegender Parsingalgorithmus für eine Aktualisierung ausgelegt wird und
- wobei in der externen Datenverarbeitungseinheit (4) eine Übersetzungsanforderung (R) der M-Bus Rohdaten (RD) generiert und an die zentrale Datenverarbeitungseinheit (1) übermittelt wird und die übersetzten Daten in dem neu generierten Format zurück an die externe Datenverarbeitungseinheit (4) gesendet werden.

2. Verfahren nach Anspruch 1, wobei die M-Bus Rohdaten (RD) in einem Datenstrom (S) übermittelt werden.

3. Verfahren nach Anspruch 1 oder 2, wobei in der zentralen Datenverarbeitungseinheit (1) zumindest eine neue Datei in einem Listen-, Tabellen- und/oder Textformat erzeugt wird, in welche die übersetzten Daten (D') eingefügt werden.

4. Verfahren nach einem der vorhergehenden Ansprüche, wobei auf Übermittlungsanforderung (R') die übersetzten Daten (D') von der zentralen Datenverarbeitungseinheit (1) an die externe Datenverarbeitungseinheit (4) übermittelt werden.

5. Verfahren nach einem der vorhergehenden Ansprüche, wobei eine Zuordnung der übersetzten Daten (D') anhand einer Identifikationsnummer der zumindest einen Datenerfassungseinheit (5) erfolgt.

6. Verfahren nach einem der vorhergehenden Ansprüche, wobei anhand der übersetzten Daten (D') ein Verbrauch und dem Verbrauch zugeordnete Kosten ermittelt werden und/oder eine Status-Information und eine der Status-Information zugeordnete Dienstleistung ermittelt werden.

7. Verfahren nach einem der vorhergehenden Ansprüche, wobei die übersetzten Daten (D') in der zentralen Datenverarbeitungseinheit (1) gespeichert werden.

8. Vorrichtung (V) zur Durchführung des Verfahrens zur Ermittlung von Daten (D) nach einem der Ansprüche 1 bis 7, umfassend zumindest
- eine externe Datenverarbeitungseinheit (4) und eine zur Kommunikation mit der externen Datenverarbeitungseinheit (4) eingerichtete zentrale Datenverarbeitungseinheit (1),
- wobei die externe Datenverarbeitungseinheit (4) zur Übermittlung von mittels zumindest einer Datenerfassungseinheit (5) erfassten Rohdaten (RD), insbesondere Messdaten, in einem M-Bus Format über eine Internetverbindung an die zentrale Datenverarbeitungseinheit (1) eingerichtet ist,
- wobei die zentrale Datenverarbeitungseinheit (1) zumindest einen M-Bus Parser (2) umfasst, welcher zur Übersetzung von M-Bus Rohdaten (RD) in übersetzte Daten (D') und zur Übermittlung der übersetzten Daten (D`)über eine Internetverbindung an die externe Datenverarbeitungseinheit (4) eingerichtet ist,
- wobei die externe Datenverarbeitungseinheit (4) zur Ermittlung von Daten (D) aus übersetzten Daten (D') eingerichtet ist und
- wobei die zentrale Datenverarbeitungseinheit (1) zur Aktualisierung eines dem M-Bus Parser (2) zugrundeliegenden Parsingalgorithmus eingerichtet ist.

9. Computerprogrammprodukt zur Durchführung eines Verfahrens nach einem der Ansprüche 1 bis 7.

## Claims

1. Method for determining time-variant and/or static data (D), wherein
- M-bus raw data (RD) are acquired by means of at least one data acquisition unit (5),
- the M-bus raw data (RD) are transmitted in an M-bus format to an external data processing unit (4),
- the transmitted M-bus raw data (RD) are transmitted via an Internet connection to a central data processing unit (1),
- in the central data processing unit (1) the M-bus raw data (RD) are translated by means of at least one M-bus parser (2) and
- the translated data (D') are transmitted via an Internet connection to the external data processing unit (4) in order to determine data (D),
- wherein the M-bus parser (2) is provided as an online service and a parsing algorithm on which the M-bus parser (2) is based is designed for updating and
- wherein in the external data processing unit (4) a translation request (R) for the M-bus raw data (RD) is generated and transmitted to the central data processing unit (1) and the translated data in the newly generated format are sent back to the external data processing unit (4).

2. Method according to Claim 1, wherein the M-bus raw data (RD) are transmitted in a data stream (S).

3. Method according to Claim 1 or 2, wherein in the central data processing unit (1) at least one new file is generated in a list, table and/or text format, the translated data (D') being inserted into said at least one new file.

4. Method according to any of the preceding claims, wherein in response to a transmission request (R') the translated data (D') are transmitted from the central data processing unit (1) to the external data processing unit (4).

5. Method according to any of the preceding claims, wherein the translated data (D') are assigned on the basis of an identification number of the at least one data acquisition unit (5).

6. Method according to any of the preceding claims, wherein, on the basis of the translated data (D'), a consumption and costs assigned to the consumption are determined and/or status information and a service assigned to the status information are/is determined.

7. Method according to any of the preceding claims, wherein the translated data (D') are stored in the central data processing unit (1).

8. Device (V) for carrying out the method for determining data (D) according to any of Claims 1 to 7, comprising at least
- an external data processing unit (4) and a central data processing unit (1) configured for communication with the external data processing unit (4),
- wherein the external data processing unit (4) is configured for transmitting raw data (RD) acquired by means of at least one data acquisition unit (5), in particular measurement data, in an M-bus format via an Internet connection to the central data processing unit (1),
- wherein the central data processing unit (1) comprises at least one M-bus parser (2) configured for translating M-bus raw data (RD) into translated data (D') and for transmitting the translated data (D') via an Internet connection to the external data processing unit (4),
- wherein the external data processing unit (4) is configured for determining data (D) from translated data (D') and
- wherein the central data processing unit (1) is configured for updating a parsing algorithm on which the M-bus parser (2) is based.

9. Computer program product for carrying out a method according to any of Claims 1 to 7.

## Revendications

1. Procédé permettant de déterminer des données (D) variables dans le temps et/ou statiques, dans lequel
- des données brutes M-Bus (RD) sont acquises au moyen d'au moins une unité d'acquisition de données (5),
- les données brutes M-Bus (RD) sont transmises dans un format M-Bus à une unité de traitement de données externe (4),
- les données brutes M-Bus (RD) transmises sont transmises par une liaison internet à une unité de traitement de données centrale (1),
- dans l'unité de traitement de données centrale (1), les données brutes M-Bus (RD) sont traduites au moyen d'au moins un analyseur M-Bus (2), et
- les données traduites (D') sont transmises par une liaison internet à l'unité de traitement de données externe (4) pour déterminer des données (D),
- dans lequel l'analyseur M-Bus (2) est fourni sous forme de service en ligne, et un algorithme d'analyse à la base de l'analyseur M-Bus (2) est interprété pour une mise à jour, et
- dans lequel, dans l'unité de traitement de données externe (4), une demande de traduction (R) des données brutes M-Bus (RD) est générée et transmise à l'unité de traitement de données centrale (1), et les données traduites dans le format nouvellement généré sont renvoyées à l'unité de traitement de données externe (4).

2. Procédé selon la revendication 1, dans lequel les données brutes M-Bus (RD) sont transmises dans un flux de données (S).

3. Procédé selon la revendication 1 ou 2, dans lequel, dans l'unité de traitement de données centrale (1) est généré au moins un nouveau fichier dans un format de liste, de table et/ou de texte dans lequel les données traduites (D') sont insérées.

4. Procédé selon l'une quelconque des revendications précédentes, dans lequel suite à une demande de transmission (R'), les données traduites (D') sont transmises par l'unité de traitement de données centrale (1) à l'unité de traitement de données externe (4).

5. Procédé selon l'une quelconque des revendications précédentes, dans lequel une attribution des données traduites (D') est effectuée à l'aide d'un numéro d'identification de ladite au moins une unité d'acquisition de données (5).

6. Procédé selon l'une quelconque des revendications précédentes, dans lequel à l'aide des données traduites (D'), une consommation et des coûts attribués à la consommation sont déterminés, et/ou une information d'état et un service attribué à l'information d'état sont déterminés.

7. Procédé selon l'une quelconque des revendications précédentes, dans lequel les données traduites (D') sont stockées dans l'unité de traitement de données centrale (1).

8. Dispositif (V) permettant d'exécuter le procédé de détermination de données (D) selon l'une quelconque des revendications 1 à 7, comprenant au moins
- une unité de traitement de données externe (4) et une unité de traitement de données centrale (1) conçue pour communiquer avec l'unité de traitement de données externe (4),
- dans lequel l'unité de traitement de données externe (4) est conçue pour transmettre à l'unité de traitement de données centrale (1) des données brutes (RD) acquises au moyen d'au moins une unité d'acquisition de données (5), en particulier des données de mesure, dans un format M-Bus par une liaison internet,
- dans lequel l'unité de traitement de données centrale (1) comprend au moins un analyseur M-Bus (2) qui est conçu pour traduire des données brutes M-Bus (RD) en données traduites (D') et pour transmettre les données traduites (D') par une liaison internet à l'unité de traitement de données externe (4),
- dans lequel l'unité de traitement de données externe (4) est conçue pour déterminer des données (D) à partir de données traduites (D'), et
- dans lequel l'unité de traitement de données centrale (1) est conçue pour mettre à jour un algorithme d'analyse à la base de l'analyseur M-Bus (2).

9. Produit de programme informatique permettant d'exécuter un procédé selon l'une quelconque des revendications 1 à 7.
